Europäisches Patentamt

European Patent Office

Office européen des brevets

(11) Publication number : **0 395 060 B1**

(12) **EUROPEAN PATENT SPECIFICATION**

(45) Date of publication of patent specification :
06.09.95 Bulletin 95/36

(51) Int. Cl.⁶ : **H04J 14/02, H04B 10/06, G02B 6/26**

(21) Application number : **90107956.6**

(22) Date of filing : **26.04.90**

(54) **Optical receiver.**

(30) Priority : **28.04.89 JP 107721/89**
**11.09.89 JP 232762/89**
**19.04.90 JP 101627/90**

(43) Date of publication of application :
**31.10.90 Bulletin 90/44**

(45) Publication of the grant of the patent :
**06.09.95 Bulletin 95/36**

(84) Designated Contracting States :
**DE FR GB**

(56) References cited :
**EP-A- 0 013 971**
**EP-A- 0 197 263**
**EP-A- 0 213 726**
**GB-A- 2 184 258**
**US-A- 3 755 676**
**US-A- 4 745 591**
**US-A- 4 800 557**

(73) Proprietor : **Nippon Telegraph and Telephone Corporation**
**1-6 Uchisaiwaicho 1-chome**
**Chiyoda-ku**
**Tokyo 100 (JP)**

(72) Inventor : **Matsumoto, Takao**
**2-20-4 Higashiasahina,**
**Kanazawa-ku**
**Yokohama-shi, Kanagawa (JP)**
Inventor : **Koga, Masafumi**
**2-402 NTT-Hayashi-shataku,**
**2-1-3 Hayashi**
**Yokosuka-shi, Kanagawa (JP)**

(74) Representative : **Pellmann, Hans-Bernd, Dipl.-Ing. et al**
**Patentanwaltsbüro**
**Tiedtke-Bühling-Kinne & Partner**
**Bavariaring 4**
**D-80336 München (DE)**

## Description

Optical communication technology includes wavelength multiplexing techniques which can transmit optical signals with a plurality of different wavelengths simultaneously and allot different information to different wavelengths in order to effectively utilize transmission path. This type of technique needs optical receivers with a function which enables the separation of optical signals according to their wavelengths. The present invention relates to an optical receiver of this type. More particularly, the present invention relates to an optical receiver which has a function of separating multiplex optical signals according to their wavelengths when the spectrum of the wavelengths of the optical signals is narrow and stable.

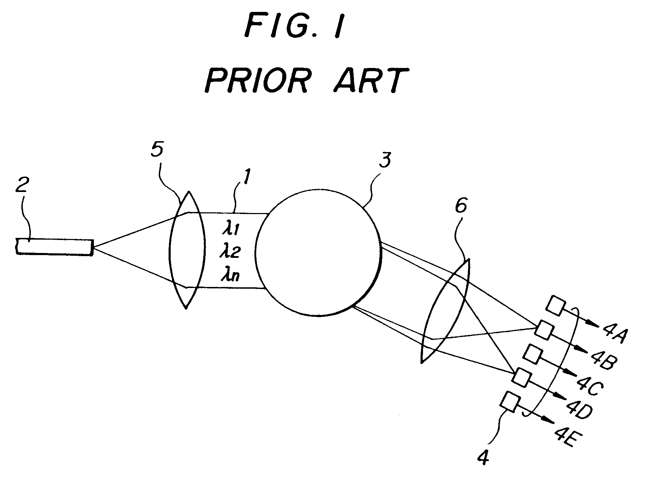

Fig. 1 shows an example of a conventional optical receiver. As shown in Fig. 1, a wavelength-multiplexed signal beam 1 is scattered by an angle scatter element 3 after being transmitted through an optical fiber 2 and transmitted light rays are detected by respective photodetectors 4-A to 4-E which receive corresponding light rays scattered at respective scatter angles. In Fig. 1, reference numerals 5 and 6 indicate an incident side lens 5 and an outgoing side lens 6. As will be clear from the above-described configuration, the conventional optical receiver is a device constructed so as to detect differences in angle in terms of differences in position. Therefore, with the optical receiver, smaller differences in scatter angle gives rise to smaller difference in position, which makes detection of differences difficult accordingly. Generally, allowance in the difference in position is small, e.g., as small as several tens micrometers ($\mu$m), when the optical receiver is used to divide wavelength-multiplexed light of which distance between adjacent wavelengths is in the order of 10 nm, and for this reason high accuracy on the order of micrometers ($\mu$m) is required for optical coupling the angle scatter element 3 with the photodetector 4. This increases production costs of the device.

In addition, it is natural that the conventional optical receiver deteriorates its demultiplexing characteristics even with a slight fluctuation in the wavelength of light source because it requires high precision on the order of micrometers in the optical coupling of the angle scatter element with the photodetector.

As will also be clear from the configuration shown in Fig. 1, the variation of the wavelength of the light source results in difference in the scatter angle for signal light, which requires for alterations in the design of the device. Therefore, the optical receiver lacks sufficient flexibility in its response toward changes in conditions such as fluctuation in wavelength.

A similar optical receiver is disclosed in EP-A-0 013 971 including the features of the preamble of the claim 1 of the present invention.

As described above, these conventional optical receivers are disadvantageous in that it is uneconomical since its production cost is high and it has poor demultiplexing characteristics as well as it has poor flexibility towards various conditions upon measurement.

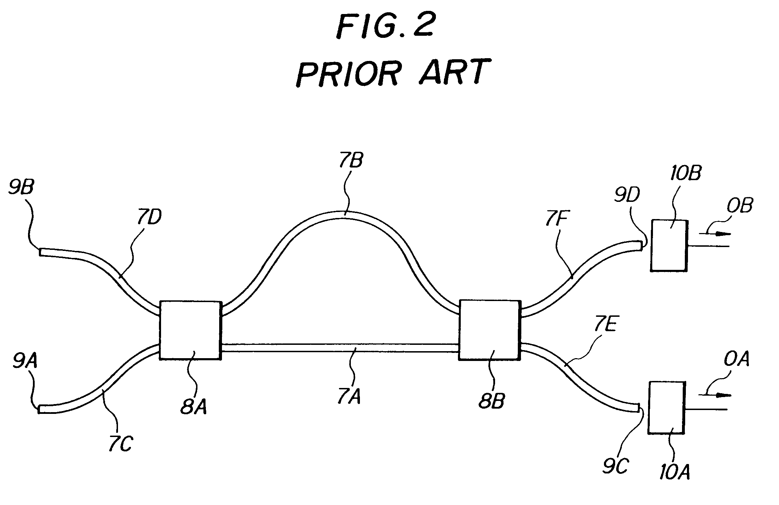

As another example of conventional optical receivers there is known a device which has a configuration as shown in Fig. 2. This type of optical receiver includes a combination of an optical receiver with an optical demultiplexer which realizes Mach-Zehnder interferometer that has been well known in the field of classical optics using optical waveguides.

In Fig. 2, symbols 7A through 7F indicate single mode optical waveguides, 8A and 8B directional couplers, 9A through 9D ports, and 10A and 10B optical elements. The two directional couplers 8A and 8B are connected to each other via the two single mode optical waveguides 7A and 7B. The optical circuit shown in Fig. 2 has four ports 9A, 9B, 9C and 9D. The two single mode optical waveguides are different from each other in their length. Therefore, considering the case where optical signals are launched into the port 9A, the optical signals which have been separated with the directional coupler 8A and transmitted separately through the single mode optical waveguides 7A and 7B, respectively, are synthesized again in the directional coupler 8B, the optical signal which has been transmitted through the single mode optical waveguide 7A has a phase different from that of the optical signal which has been transmitted through the single mode optical waveguide 7B. The phase difference varies depending on the wavelength (or frequency) of the optical signals. The outputs from the ports 9C and 9D are determined depending on the phase difference.

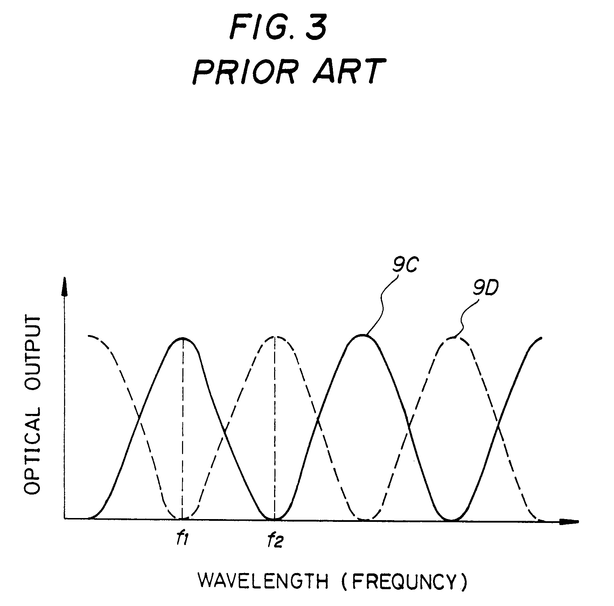

Fig. 3 shows output characteristics obtained at the ports 9C and 9D of the a.m. conventional optical receiver, e.g., in the case where the separation ratio is 1 : 1 assuming that the wavelengths (or frequencies) of the two optical signals launched into the port 9A are $f_1$ and $f_2$, respectively. In this case, the optical output at the port 9C is high and that at the port 9D is low at the wavelength $f_1$ and on the contrary the optical output at the port 9C is low and that at the port 9D is high at the wavelength $f_2$. Utilizing this characteristics, the device can be used as an optical demultiplexer which allows signals $f_1$ and $f_2$ launched into the port 9A to branch and be output from the ports 9C and 9D, respectively. Therefore, in the conventional optical receiver described above, in order to separate individual signals according to respective wavelengths from wavelength multiplexed optical signal, it has been so designed that photodetectors 10A and 10B are connected to the output ports 9C and 9D, respectively, so that electric signals OA and OB obtained from the respective photodetectors can be utilized as they are.

That is, the electric signals OA and OB have been utilized as electric signals which correspond to optical signals with wavelengths (or frequencies) $f_1$ and $f_2$, respectively.

However, in the case where optical receivers are to be realized with the conventional configuration as shown in Fig. 2, subtle difference in the length and position of the optical waveguides gives a great influence on the wavelength separation characteristics of the devices since they utilize interference between the optical waveguides. For this reason, there has been required high technique for designing and producing optical circuits, and if such technique were available the temperature of the optical circuits produced must be controlled with a precision of less than 1/10 °C and thus their characteristics tend to vary absent such temperature control. Further problem is that the configuration of the optical circuit becomes more complex with increased number of the wavelengths to be used, which causes increase in the scale of the circuit and deterioration of loss characteristics.

It is, therefore, an object of the present invention to provide an optical wavelength demultiplexer which can separate a plurality of optical signals with different wavelengths in a wavelength multiplexed optical communication, by using an optical circuit which is simple and easy to fabricate.

According to the present invention this object is achieved by an optical wavelength demultiplexer comprising an optical conversion device for converting a difference in wavelengths between a plurality of optical input signals, which are input at one terminal surface of said optical conversion device and propagate with respective propagation constants, into a difference in spatial power distribution on another terminal surface of said optical conversion device in accordance with the difference between the propagation constants, and a pattern recognition means for recognizing patterns of the spatial power distribution to output output signals indicating a result of recognizing the patterns, said optical wavelength demultiplexer being characterized in that said pattern recognition means comprises a photo-detector array which receives optical photo-detector input signals and converts said optical photo-detector input signals into electric photo-detector output signals, and a neural network which, more particularly, comprises processing elements realized by an addition processor in which weighted addition of signals from a plurality of input ports are performed, a non-linear processor in which signals are processed non-linearily, and connection elements which combine the processing elements (40, 41) with each other, and which processes said electric photo-detector output signals from said photo-detector array and outputs said output signals corresponding to optical signals having respective wavelengths contained in said optical input signals having one or more wavelengths launched into said optical conversion device.

Thus, by using a neural network, which has the functions of recognition, association, learning and the like of input signals launched into it, in combination with a photo-detector array an optical wavelength demultiplexer can be realized which shows low production costs, good demultiplexing characteristics and a high flexibility towards various conditions upon measurement.

The advantages of the invention will become apparent and obvious to those skilled in the pertinent art upon referring to the following description provided in connection with the accompanying drawings, of which:

Fig. 1 is a schematic view which illustrates an example of a conventional optical receiver;

Fig. 2 is a schematic view which illustrates another example of a conventional optical receiver;

Fig. 3 is a graph showing output characteristics of the another example of the conventional optical receiver shown in Fig. 2; Figs. 4 through 11 are to explain a first embodiment of an optical receiver of the present invention, in which:

Fig. 4 is a schematic perspective view illustrating the configuration of the optical receiver according to the first embodiment of the present invention;

Figs. 5A and 5B each are a first diagram showing an example of optical power distribution in an optical multimode circuit for explaining the.. first embodiment of the present invention;

Figs. 6A, 6B, 6C and 6D each are a second diagram showing another example of optical power distribution in an optical multimode circuit for explaining the first embodiment of the present invention;

Figs. 7A, 7B, 7C and 7D each are a graph showing optical power distribution of an optical multimode waveguide at its output terminal surface, which is intended to explain the wavelength resolution of the optical multimode waveguide used as the optical multimode circuit in the first embodiment of the present invention;

Figs. 8A, 8B and 8C each are a graph showing experimental results illustrating the operation of an optical receiver according to the first embodiment of the present invention, in which:

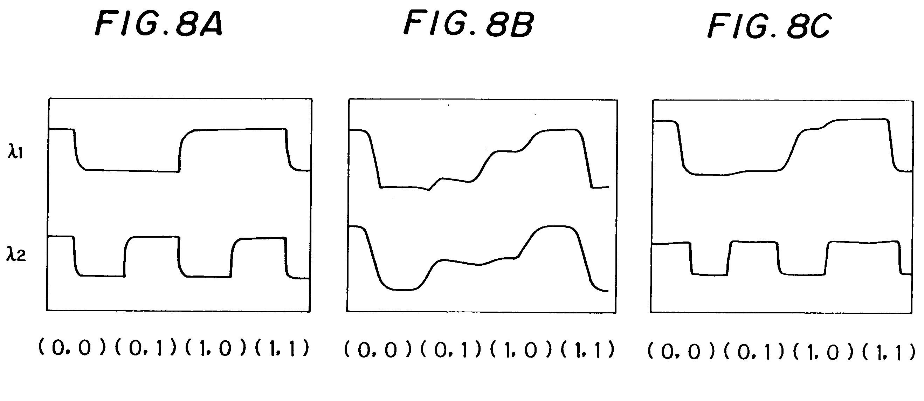

Fig. 8A is a graph showing a transmission waveform pattern at an optical input portion;

Fig. 8B is a graph showing a waveform pattern at a photo-detector array;

Fig. 8C is a graph showing a waveform pattern of branched light at an output side of a neural network;

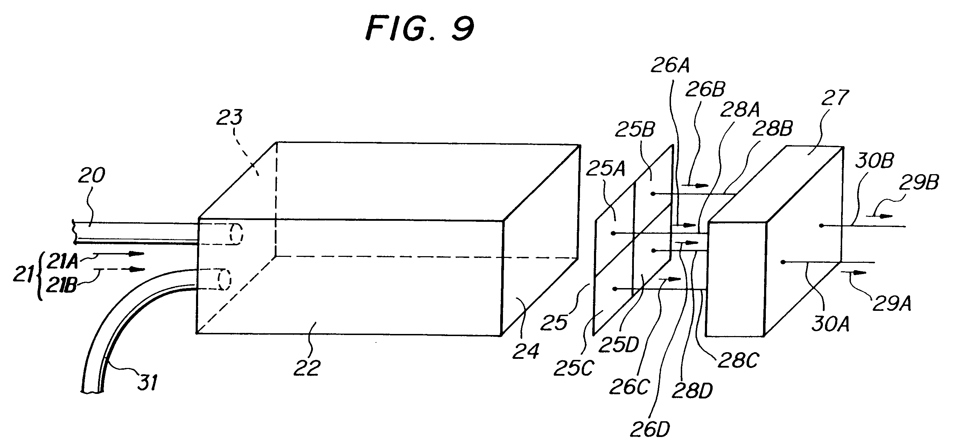

Fig. 9 is a schematic perspective view of the optical receiver according to the first embodiment of the present invention in which heterodyne detection mechanism is included;

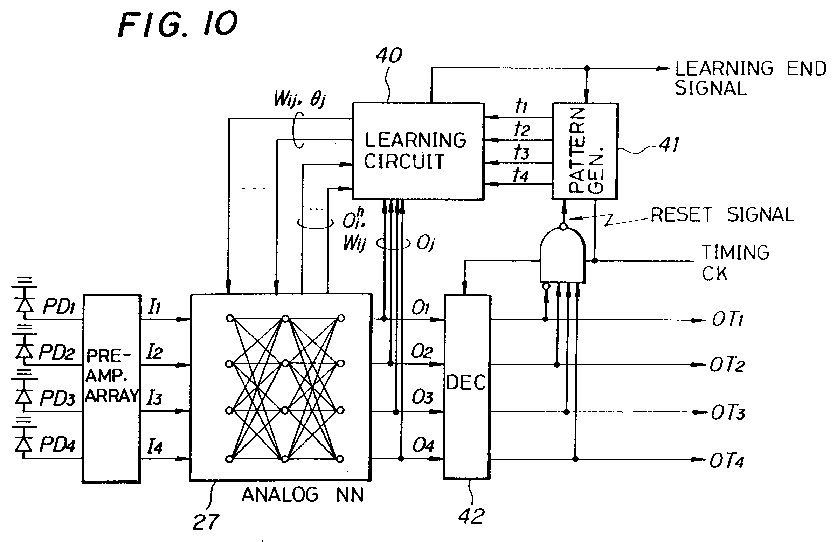

Fig. 10 is a diagram showing an example of the neural network having a self learning function;

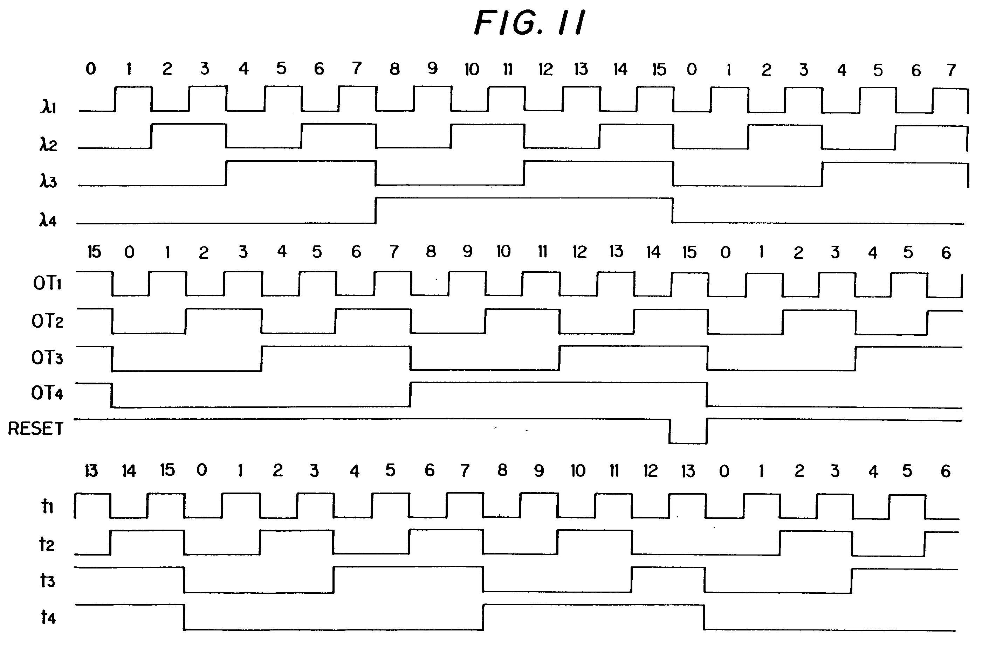

Fig. 11 is a timing chart showing the action of the neural network shown in Fig. 10;

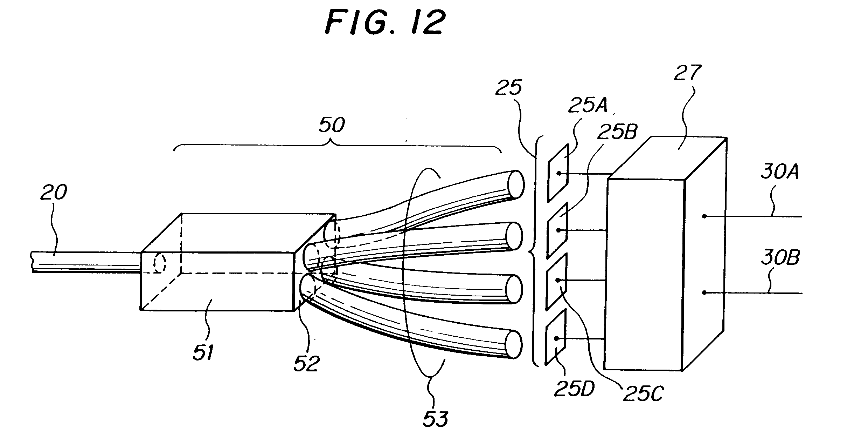

Fig. 12 is a schematic perspective view of an optical receiver according to the second embodiment of the present invention;

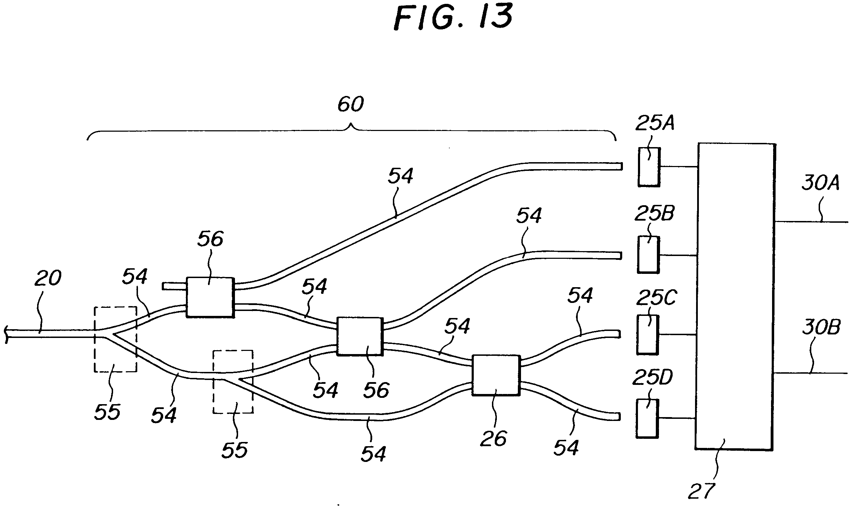

Fig. 13 is a schematic perspective view of an optical receiver according to the third embodiment of the present invention;

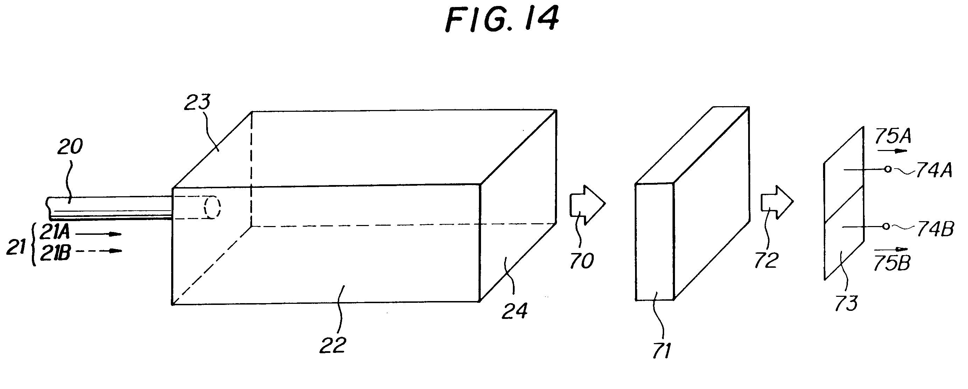

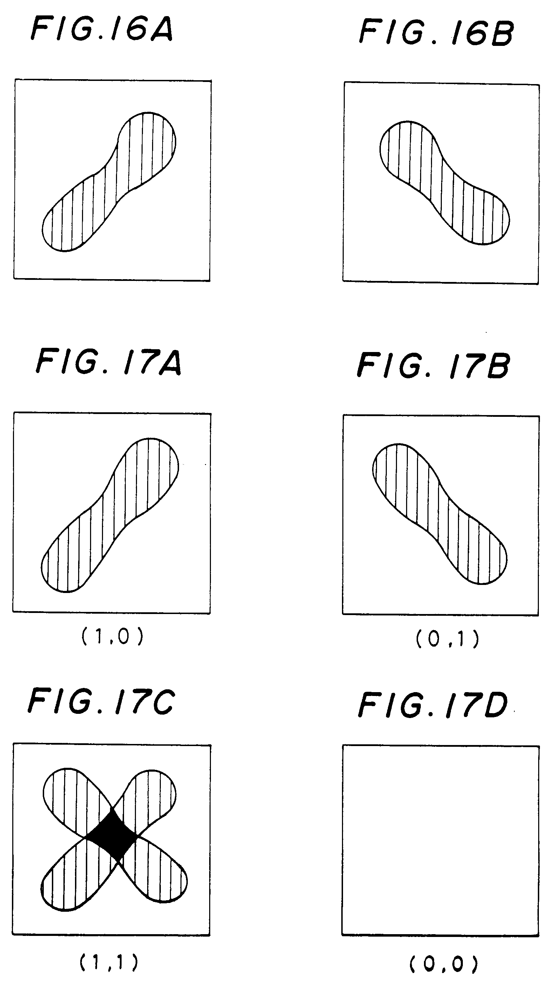

Figs. 14 through 17A, 17B, 17C and 17D each are to explain an optical receiver according to the fourth embodiment of the present invention, in which:

Fig. 14 is a schematic perspective view of the optical receiver according to the fourth embodiment of the present invention;

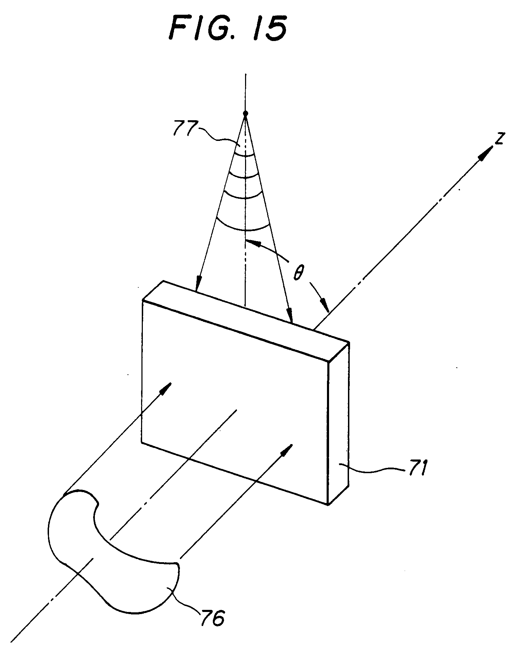

Fig. 15 is a schematic perspective view of a hologram element, illustrating a mechanism for memorizing patterns in the hologram element;

Figs. 16A and 16B each are a diagram exemplifying optical power distribution at terminal surface for each wavelength of output light from the optical multimode circuit used in the fourth embodiment of the present invention;

Figs. 17A, 17B, 17C and 17D each are a diagram exemplifying optical power distribution at terminal surface of wavelength multiplexed optical signals of output light from the optical multimode circuit used in the fourth embodiment of the present invention;

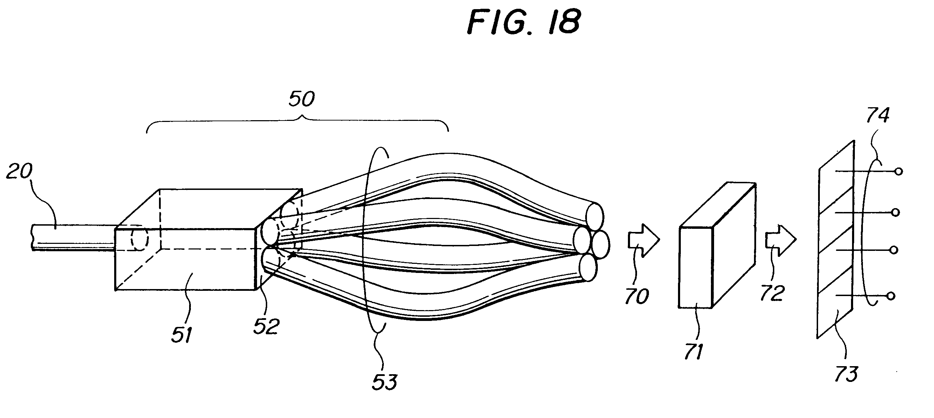

Fig. 18 is a schematic perspective view of the configuration of an optical receiver according to the fifth embodiment of the present invention;

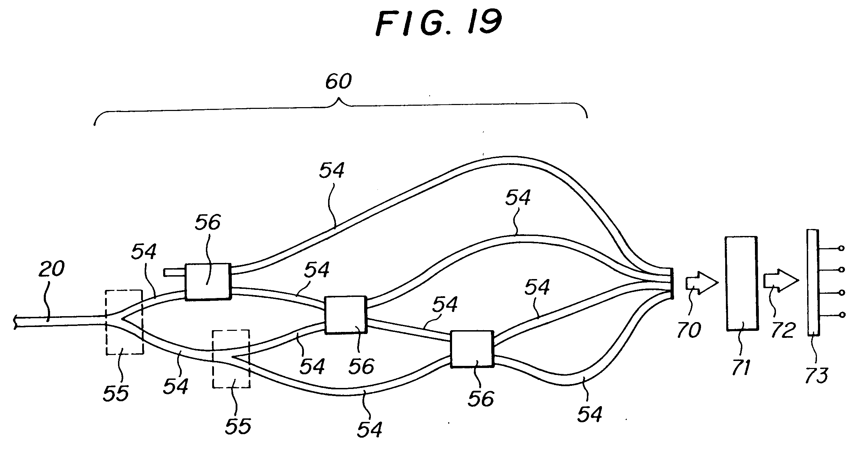

Fig. 19 is a plan view of the configuration of an optical receiver according to the sixth embodiment of the present invention;

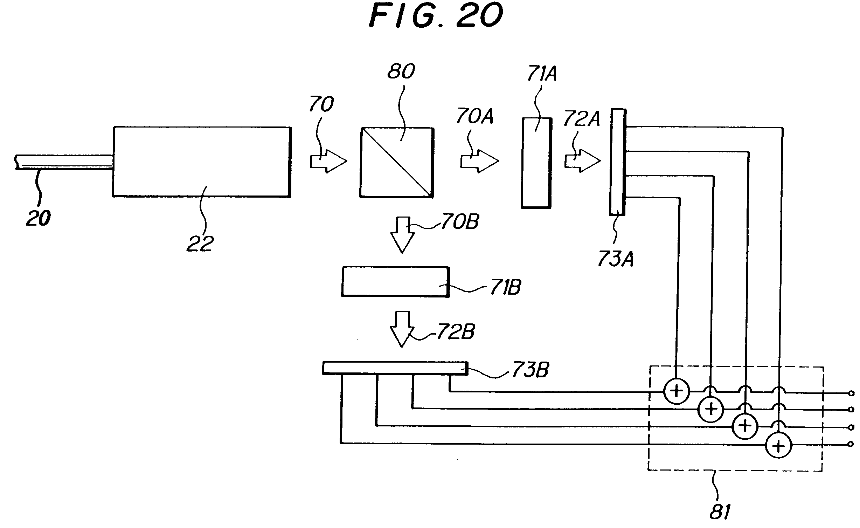

Fig. 20 is a plan view of the configuration of an optical receiver according to the seventh embodiment of the present invention;

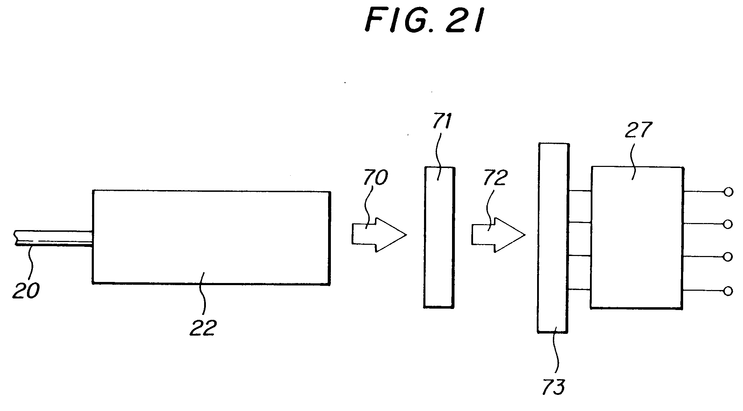

Fig. 21 is a plan view of the configuration of an optical receiver according to the eighth embodiment of the present invention;

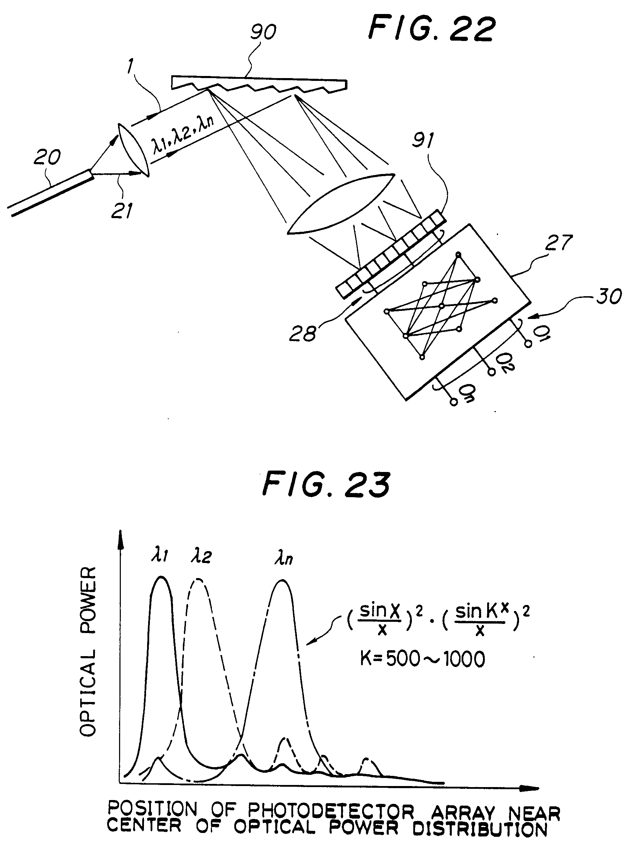

Figs. 22 through 26 each are to explain the ninth embodiment of the present invention, in which:

Fig. 22 is a plan view of the configuration of an optical receiver according to the ninth embodiment of the present invention;

Fig. 23 is a graph showing optical power distribution on a photo-detector array;

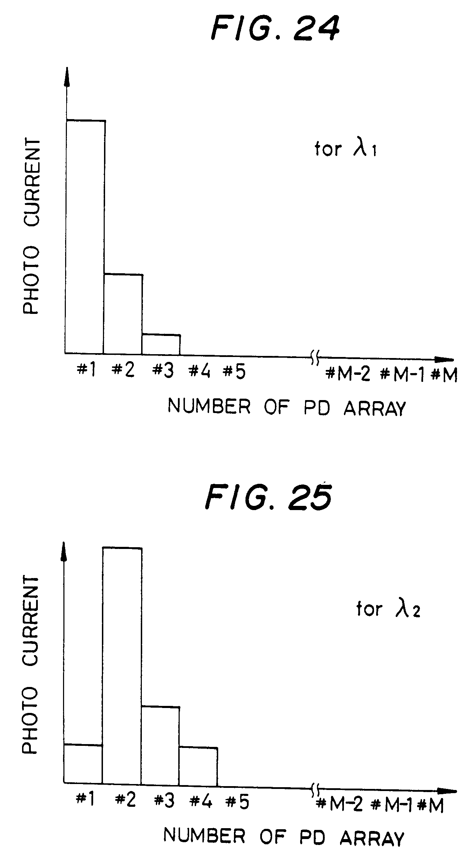

Fig. 24 is a graph showing distribution of photocurrent when signal light with a wavelength $\lambda_1$ is received by the photo-detector array;

Fig. 25 is a graph showing distribution of photocurrent when signal light with a wavelength $\lambda_2$ is received by the photo-detector array; and

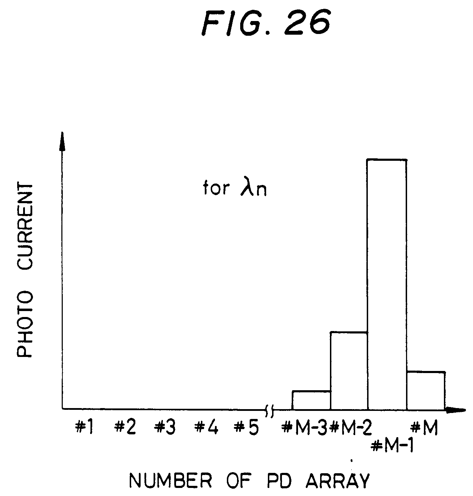

Fig. 26 is a graph showing distribution of photocurrent when signal light with a wavelength $\lambda_n$ is received by the photo-detector array.

## FIRST EMBODIMENT

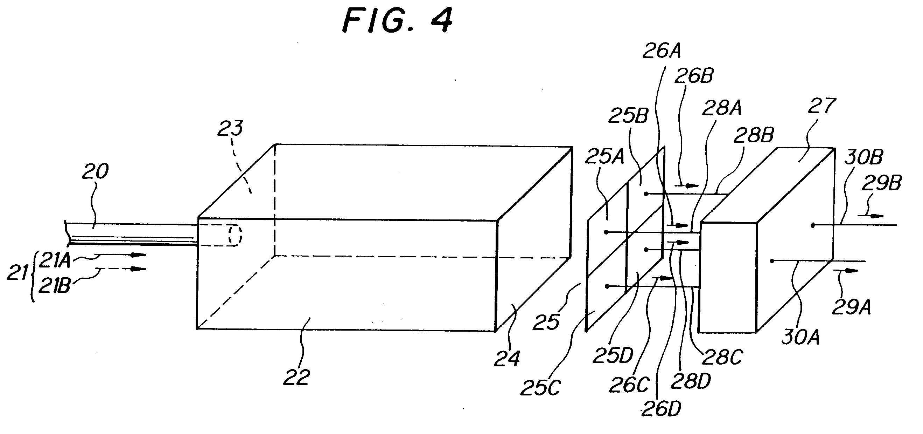

The first embodiment of the present invention is shown in Fig. 4, in which reference numeral 20 is an optical input portion, 21A and 21B optical signals, 22 a optical multimode circuit (herein, optical multimode waveguide alone), 23 one terminal surface (input terminal surface) of the optical multimode circuit 22, 24 the other terminal surface (output terminal surface) of the optical multimode circuit 22, 25A through 25D photo-detector arrays, 26A throughout 26D electric signals, 27 a neural network, 28A through 28D input ports, 29A and 29B output signals, and 30A and 30B output ports.

As described above, this embodiment is characterized by a configuration in which the optical multimode circuit is connected to the photo-detector arrays and the neural network in order to separate individual signals contained in the respective optical signals with different wavelengths. Therefore, definite difference between this embodiment and the prior art is in that the former uses an optical multimode circuit and a neural network. The term "neural network" as used herein refers to a signal processing network which comprises processing elements realized by an addition processor in which weighted addition of signals from a plurality of input ports are performed and a non-linear processor in which input signals are processed non-linearly, and connection elements which combine the processing elements with each other, i.e., an optical circuit which has functions of recognition, association, learning and the like of input signals launched into the whole network. For this type of technology, reference is made, for example, to D. E. Rummerlhart, J.L. McElland and the PDP Research Group: "Parallel Distributed Processing", MIT Press, Cambridge (1986).

Next, explanation will be made on the operation of the optical receiver having the above-described configuration. The optical signal 21 launched into the optical input portion 20 contains optical signals 21A and 21B with wavelengths different from each other. After coming out of the waveguide of the input portion 20, the optical signals 21A and 21B propagate in the optical multimode circuit 22 and come out of one terminal surface 24 thereof and enters the photo-detector array 25 and are combined therein. It should be noted that the configuration shown in Fig. 4, the optical multimode circuit 22 is constructed by only a optical multimode waveguide. In the photo-detector array 25, the photodetectors 25A, 25B, 25C and 25D convert optical signals into electric signals 26A, 26B, 26C and 26D, respectively. The electric signals 26A, 26B, 26C and 26D enter the neural network 27 from the input ports 28A, 28B, 28C and 28D, respectively, and are processed therein. As the result, final output signals 29A and 29B are obtained from the output ports 30A and 30B.

In the embodiment of the configuration shown in Fig. 4, the optical power distribution of the optical multimode circuit 22 on its output side terminal surface varies depending on difference in the wavelength of the optical signal 21. This is because a plurality of modes which are propagated in the optical multimode circuit 22 have propagation constants different from each other in wavelength dependence and thus there naturally occurs wavelength dependence in the optical power distribution on the output side terminal surface 24 which appears as the result of interference among the respective modes. The optical power distribution of a type which appears on a terminal surface of a optical multimode circuit when light having a narrow spectrum is propagated in the optical multimode circuit is generally called as "speckle pattern" as described in R. E. Epworth: "Modal Noise - Causes and Cures", Laser Focus, pp. 109-115 (Sept. 1981). Although the incident optical system on the input side terminal surface 23 of the optical multimode circuit 22 is stationary as shown in Fig. 4, difference in the wavelength of the optical signal 21 gives rise to different optical power distribution on the output side terminal surface 24.

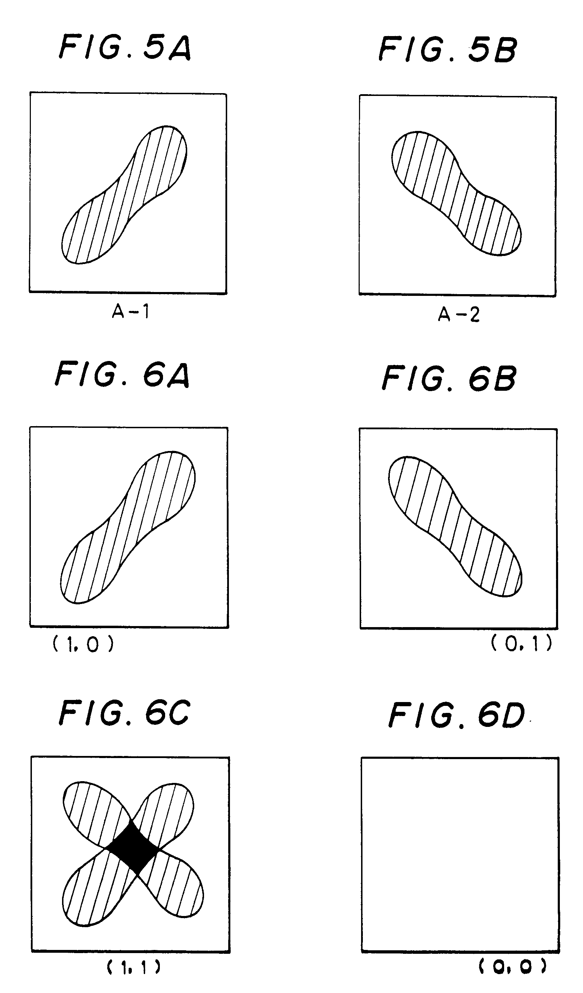

Figs. 5A and 5B show examples of optical power distribution on the output side terminal surface 24. Fig. 5A shows optical power distribution when only the optical signal 21A is launched into the optical multimode circuit 22 while fig. 5B shows optical power distribution when only the optical signal 21B is launched into the optical multimode circuit 22. The slashed area indicates optical power higher than that indicated by blank area.

Assume that two optical signals 21A and 21B are modulated with respect to their intensity with digital signals bearing different information to form wavelength multiplexed optical signals which then are introduced into the optical multimode circuit 22 via the optical waveguide of the input portion 20. Then, the optical signals can be in one of four states:

(1) a state in which the optical signals 21A and 21B are "1" and "0", respectively;
(2) a state in which the optical signals 21A and 21B are "0" and "1", respectively;
(3) a state in which the both optical signals 21A and 21B are "1"; and
(4) a state in which the both optical signals 21A and 21B are "0".

Figs. 6A, 6B, 6C and 6D each show optical power distribution in the case of the above-described state (1), (2), (3) or (4) based on the examples shown in Figs. 5A and 5B. Black area indicates optical power higher than that indicated by slashed area and the slashed area has optical power which is between optical power of blank area and the black area.

As will be apparent from Fig. 6, the optical power distribution on the output side terminal surface 24 varies for each of the four states described above. The four optical power distribution patterns shown in Fig. 6A, 6B, 6C and 6D, respectively, are detected with the photo-detector array 25 and the respective electric signals 26 are launched into the neural network 27. The neural network 27 has a function that enables presetting of its internal conditions so that corresponding predetermined output patterns can be generated when predetermined input signal patterns are introduced. Assuming that the two output signals 29A and 29B from the neural network 27 have signal levels $E_1$ and $E_2$, respectively, the internal conditions of the neural network 27 can be set up such that $E_1 = 1$ and $E_2 = 0$ when the optical power distribution is the one shown in Fig. 6A, $E_1 = 0$ and $E_2 = 1$ when the optical power distribution is the one shown in Fig. 6B, $E_1 = 1$ and $E_2 = 1$ when the optical power distribution is the one shown in Fig. 6C, or $E_1 = 0$ and $E_2 = 0$ when the optical power distribution is the one shown in Fig. 6D.

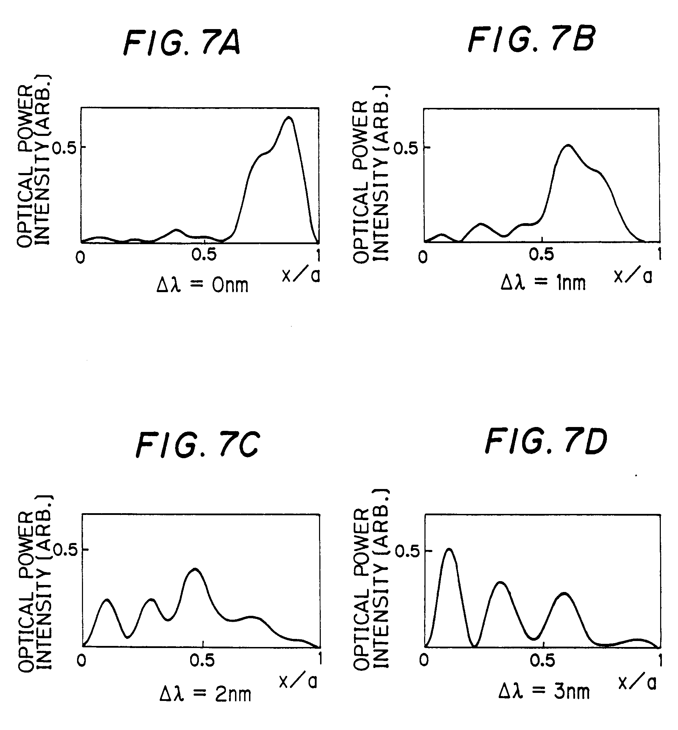

Figs. 7A through 7D are graphs elucidating by simulation the extent of variation in pattern caused by the optical multimode circuit (actually, optical multimode waveguide alone). As for the optical multimode circuit including a core and a clad, a two-dimensional slab form guide which is of multiple mode in the x-direction is taken as an example. Assuming that there occurs no penetration of electromagnetic field into the clad the distribution of electromagnetic field of the n-th mode is expressed in a scalar amount as follows:

$$E_n = \sin(\pi nx/a) \quad (1)$$

where a indicates the width of the core.

It is assumed that the core has a refractive index of 1.46, NA and the width of the core are 0.2 and 22.5 μm, respectively. These values correspond to the case where the highest mode number is 6. The length of the guide is set up to 10 cm. What is connected to the photo-detector array is near field pattern of a optical multimode waveguide.

Calculation is performed assuming that six modes represented by the equation (1) above are excited uniformly on the input side terminal surface of the optical multimode waveguide. Fig. 7 shows optical power distribution on the output side terminal surface when the wavelength of the optical signal increases by 1 nm starting from 1,550 nm. From this it follows that in order for clear change to be observed in the optical power distribution, it is necessary and sufficient that there occurs change in wavelength on the order of 1 nm. The extent of this wavelength dependence is proportional to second power of the length and NA of the optical multimode circuit.

Furthermore, in order to demonstrate realizability of the optical receiver according to this embodiment, experiments have been performed using the same configuration shown in Fig. 4 except that two photo-detector arrays and two input/two output type neural network are used to carry out demultiplexation at a rate of two wavelength/100 Mbit/s. The results obtained are shown in Figs. 8A through 8C.

Fig. 8A shows the transmitted waveforms for signals of $\lambda_1$ (upper trace) and $\lambda_2$ (lower trace) including four states.: $(\lambda_1, \lambda_2) = (0, 0), (0, 1), (1, 0)$ or $(1,1)$. The detected waveforms at the two PD's are shown in Fig. 8B. The optical signals for $\lambda_1$ and $\lambda_2$ are superimposed in each waveform according to the optical power distribution. The neural network correctly regenerates the original signals as shown in Fig. 8C.

From this it follows that even if optical signals 21A and 21B which have different wavelengths and have been modulated with respect to their intensity with different signals are received at the optical input portion 20 in Fig. 4 in a wavelength multiplexed state, the original modulation signals can be regenerated at the output ports 20A and 30B of the neural network 27 in accordance with the embodiment shown in Fig. 4.

In the above description, an example was taken for simplicity which used intensity modulated optical signals. However, the present invention is applicable not only to such intensity modulated cases but also to frequency modulated cases. In the case of intensity modulation, the optical power distributions A-1 and A-2 shown in Figs. 5A and 5B, respectively, appear or disappear on the terminal surface corresponding to the states of "1" or "0" of the optical signals 21A and 21B having different wavelengths. On the other hand, in the case of frequency modulation, the optical power distribution assumes two patterns corresponding to the state "1" or "0" of the optical signal 21A. Therefore, there appear four different patterns for two wavelength multiplexed signal light. This is because the intensity of light is constant and only the frequency assumes two values in the case of digital frequency modulation and therefore there appear optical power distributions corresponding to the respective frequencies on the output side terminal surface 24. If the internal conditions of the neural network 27 are set up taking into consideration the four patterns, the original modulation signals can be regenerated similarly to the case of intensity modulation. Here, bivalent digital frequency modulation has been explained. However, the same idea is of course valid for multivalent digital frequency modulation.

In the foregoing, although the first embodiment of the present invention has been explained with reference to Figs. 4, 5A and 5B, 6A through 6D, 7A through 7D and 8A through 8C, the configuration of the optical receiver of the present invention should not be construed as being limited to the one shown in Fig. 4 or to those described in the following embodiments but obviously there may be made various variations thereon as described, for example, in (1) to (10) below.

That is, in the first embodiment of the present invention the following measures may be taken.

(1) In the above description, the number of the optical signals with different wavelengths is 2, that of the elements of the photo-detector array 25 is 4, that of the input ports 28 of the neural network 27 is 4, that of the output ports 30 of the neural network 27 is 2, and that of the output signals is 2. However, these numbers may be set up freely depending on the purpose.

(2) Although it has a shape of a three-dimensional optical waveguide, the optical multimode circuit 22 may be a two-dimensional optical waveguide in the form of a slab. Similarly, the photo-detector array 25 can be made a one-dimensional array instead of the two-dimensional array.

(3) The optical parts or optical circuits are connected to each other directly or through space. However, it is possible to arrange a lens system or systems so as to intervene therebetween at a desired position or positions.

(4) The photo-detector array 25 detects optical power distribution on the output side terminal surface 24 as it is. More particularly, near field pattern of the optical power on the terminal surface 24 is detected by the photo-detector array 25. In contrast, the output side terminal surface 24 and the photo-detector array 25 may be connected to each other in a spatially remote state. In this case, far field pattern of optical power on the output side terminal surface 24 is detected by the photo-detector array 25. The far field pattern, like the near field pattern, varies in accordance with difference in the wavelength of the optical signal 21. Therefore, processed signal output similar to that in the case of the near field pattern described above can be obtained by introducing the electric signal 26 from the photo-detector array 25 into the neural network 27.

(5) There are two types of input signal light 21 obtained by wavelength multiplexing signal light which has been digitally modulated for its intensity. One is a type in which the wavelengths are synchronized with each other and the other is a type in which the wavelengths are not in synchronization. In the present invention, both of them are applicable. However, in synchronized systems, timing pulses must be inputted for achieving synchronization for the non-linear processor in the neural network. Of course, the synchronized systems can operate at higher maximum speeds.

(6) The optical multimode circuit 22 may be a small size optical circuit, for example, the one which can be placed in one apparatus or a long optical multimode fiber of, for example, several tens kilometers long. In the latter case, the left hand side terminal of the device shown in Fig. 4 corresponds to the transmission side of the optical transmission system and the right hand side thereof corresponds to the receiver side of the optical transmission system.

(7) The optical input portion 20 is used for introducing the optical signal 21 into the optical multimode circuit 22. Of course, the optical input portion 22 may be an optical space beam in place of the optical waveguide as shown in Fig. 4.

(8) Although the photo-detector array 25 and the neural network 27 are connected to each other directly, electronic circuits such as amplifiers may be inserted therebetween, if desired.

(9) Although optical signals containing a plurality of wavelengths are introduced into the optical multimode circuit, the same processing as shown in Fig. 4 is possible when optical signals is of single wavelength if the wavelength varies continuously or discontinuously with lapse of time. In this case, the optical power distribution on the output side terminal surface 24 varies according as the wavelength varies, which makes it possible to detect the variation in wavelength as output from the neural network 27.

(10) The photo-detector array 25 directly detects the optical power distribution on the output side terminal surface 24 of the optical multimode circuit 22. On the other hand, in the field of optical communication, there are in addition to such direct detection technique as described above so-called heterodyne detection technique or homodyne detection technique in which light from a local transmission light source provided on the transmission side is mixed with the optical signal received before detection can be performed (cf., e.g., Shimada: "Coherent Optical Communication", Electronic information Communication Association, (1988)). The features of the detection techniques are in that the influence of thermal noises in the photodetector can be suppressed to thereby improve the sensitivity of photodetection. In the present invention, the heterodyne or homodyne detection technique may be adopted.

Fig. 9 exemplifies a configuration of the optical receiver in the above-described case. In Fig. 9, a part indicated by reference numeral 31 newly added to the configuration shown in Fig. 4 is an optical waveguide for introducing light from the local transmission light source provided on the receiver side into the optical multimode circuit 22. In Fig. 4, the optical waveguide 16 is connected directly onto the input side terminal surface 23 of the optical multimode circuit 22. To perform heterodyne detection, i.e., to detect the received optical signals (from the optical input portion 20) after mixing them with the light from the local transmission light source provided on the transmission side (from the optical waveguide 31), it is necessary to conduct pre-mixing sufficiently. Therefore, although there may also be employed without particular disadvantages a configuration in which the optical waveguide 16 is connected directly to the input side terminal surface 23 of the optical multimode circuit 22 as shown in Fig. 9, it is preferred to use another configuration in which the optical waveguide 31 is connected to the optical input portion 20 on the upstream of the optical multimode circuit 22.

Although no description has been made hereinbefore, the neural network 27 may be a hardware composed of one or more electronic or optical circuits, or it may be a computer which has input and output terminals and is controlled by a software.

As described above, the neural network 27 is a signal processing network constructed by a plurality of addition processor which performs weighted addition of signals from a plurality of input ports and a plurality of connection elements which connect non-linear processors to each other for the input signals, and it is an optical circuit which has functions of recognition, association, learning and the like of input signals into the whole network. In the present invention, it is preferred that the circuit has a learning function.

Fig. 10 exemplifies a configuration of an optical receiver with such neural network (NN) having a learning function and Fig. 11 shows a timing chart relative to the operation thereof. In the case where the neural network has a learning function, a learning circuit 40 and a pattern generator 41 are added as parts of the neural network 27. The learning circuit 40 renews weight (W) and threshold value ($\theta$) of the neural network 27 in accordance with the contents of advanced learning. The pattern generator 41 also generates teacher signals.

Learning operation is as follows. Firstly, the light source repeatedly launches $2^4 = 16$ patterns as indicated by $\lambda_1$ to $\lambda_4$ shown in Fig. 11. The optical signals are converted into electric signals by the photo-detector array 25 and then subjected to pattern recognition by the neural network 27 to be outputted as signals $D_j$ (j = 1,2, 3 or 4). Since they are subjected to S-form mild recognition processing, the signals show analog-type amplitudes. Learning proceeds by comparing the amplitude of the output signals $O_j$ with that of the teacher signals $t_j$, and gradually renewing the internal conditions (weight: $W_{ij}$, threshold value: $\theta_i$) of the neural network so that the state function $E = \Sigma(t_j - O_j)^2$ can be minimum. Upon the comparison, the pattern in which the teacher signals $t_i$ are generated must coincide with the pattern of signals launched from the light source. For example, the light source side signals assume fourteenth signal pattern shown in Fig. 11, learning becomes nonsense unless the teacher signals are of the same pattern as the fourteenth pattern shown in Fig. 11. However, it is not always the case that the patterns coincide with each other when the launching of the signals is initiated. In Fig. 11, the teacher signal pattern is eleventh pattern when the light source side signal pattern is the fourteenth one.

Therefore, there is a need for the synchronization of patterns. Pattern synchronization can be realized by resetting the pattern generator with a reset signal as shown in Fig. 10. Generation of reset signals is realized by NAND gate in the configuration of this embodiment. When the signal of the fourteenth pattern is introduced into the NAND gate, a reset signal is generated and the pattern generator begins to produce output starting from 0 (zero)-th pattern. As for the input signal to be introduced into the NAND gate, there can be used signals OT which are obtained by recognizing and regenerating the output signals $O_j$ from the neural network by a recognizer with a timing clock. Delay due to the light source signal occurs in regenerated signals $OT_j$, and the amount of delay in the example shown in Fig. 11 amounts to one time slot equivalent.

After pattern synchronization is achieved, learning for 16 patterns are performed in a plurality of times, and the learning circuit sends a learning end signal as soon as the value of the state function E becomes smaller than a predetermined value to terminate the learning.

## SECOND EMBODIMENT

Fig. 12 illustrates the second embodiment of the present invention. The same reference numerals or symbols are used for the same parts or members as those used in the first embodiment shown in Fig. 4. Major difference between the second embodiment shown in Fig. 12 and the first embodiment shown in Fig. 4 is in that the optical multimode circuit have different configurations from each other. In the first embodiment, (i) only the optical multimode waveguide is used while in the second embodiment there is used (ii) an optical circuit constructed by an optical multimode waveguide and a plurality of optical waveguides connected to its output side terminal. In this embodiment, the number of the optical waveguide is 4. The four optical waveguides are provided on their output side terminal with the photo-detector array 25 composed of four elements 25A through 25D.

## THIRD EMBODIMENT

Fig. 13 illustrates the third embodiment of the present invention. The same reference numerals or symbols are used for the same parts or members as those used in the first embodiment shown in Fig. 4. Major difference between the second embodiment shown in Fig. 13 and the first embodiment shown in Fig. 4 is also in difference in the configuration of the optical multimode circuit used. In the third embodiment, there is used as the optical multimode circuit an optical circuit constructed by (iii) a combination of a plurality of optical waveguides, directional couplers and Y-branch devices. In this embodiment, the number of the optical waveguide is 4. Many types of optical circuits can be realized by changing the combination. Needless to say, the conventional optical demultiplexer shown as an example of the prior art may be included as a part of the optical circuit described above.

## FOURTH EMBODIMENT

Fig. 14 illustrates the fourth embodiment of the present invention. The same reference numerals or symbols are used for the same parts or members as those used in the first embodiment shown in Fig. 4. Major difference between the fourth embodiment shown in Fig. 14 and the first embodiment shown in Fig. 4 is in that the pattern recognition means for recognizing spatial power distribution is different between the two embodiments. In the first embodiment, the means is (i) the photo-detector array and the neural network while in this embodiment pattern recognition is performed by (ii) a hologram element and a photo-detector array.

The output light from the optical multimode circuit 22 is connected to the hologram element. In a hologram element 71, the output light 70 from the optical multimode circuit is processed depending on the wavefront conditions thereof with the information stored in the hologram element 71 to form output light 72 different from the output light 70. The output light 72 from the hologram element is connected to a photo-detector array 73 and converted into electric signals. As the result, final output signals 75A and 75B can be obtained from output ports 74A and 74B, respectively, of the photodetector 73.

The hologram element 71 must store or memorize output pattern 76 from the optical multimode circuit 22 before it can operate. For memorization, reference light or wave 77 is used as shown in Fig. 15 in the same manner as in the conventional technique to cause interference with signal light or wave bearing information on the output pattern 76 and the hologram element is sensitized with the resulting interfered pattern. The reference light 77 is irradiated in the direction at an angle of $\theta$ with respect to the direction in which the output pattern 76 is propagated. The angle $\theta$ varies depending on the wavelength of the reference light.

When it is irradiated to the memorized hologram element 71, the output pattern 76 is diffracted in the direction of the reference light 77. Therefore, there arise diffraction waves in directions corresponding the respective wavelengths, which makes it possible to perform wavelength separation. When a spherical wave which is propagated from a point source of light is used as the reference wave, diffracted wave becomes a beam which is focusing on the position of the point source of light, and therefore wavelength separation is facilitated by arranging a photo-detector array 73 at the very position of focusing. In the case where a broad parallel beam is used as the reference wave, diffracted wave is also a broad beam which distributes on the photo-detector array 73. In the latter case, a neural network is arranged downstream of the photo-detector array in the manner described hereinbelow in order to perform recognition processing.

In the embodiment shown in Fig. 14 which has the configuration as described above, like the first embodiment described above, the optical power distribution appearing on the output side terminal surface 24 of the optical multimode circuit 22 is different between the case where only the optical signal 21A having a predetermined wavelength is launched into the optical multimode circuit 22 and the case where only the optical signal 21B having another predetermined wavelength is launched thereinto. For example, the optical power distribution shown in Fig. 16A is outputted for the optical signal 21A having first wavelength while the optical power distribution shown in Fig. 16B is outputted corresponding to the optical signal 21B having second wavelength, and in this manner input optical signal with different wavelength gives rise to output optical power distribution of different pattern. Likewise, when the two optical signals 21A and 21B are subjected to intensity modulation with respective different digital signals and the resulting wavelength multiplexed signals are launched into the optical multimode circuit 22 via the input optical waveguide 20, the optical signals received may be in one of four states. The optical power distributions on the output side terminal surface 24 for the four states are as shown in Figs. 17A, 17B, 17C and 17D, respectively. The four distribution patterns are launched into a hologram element 71. Also in the hologram element 71, like the case where the neural network 27 described in the first embodiment, it is possible to set up the internal conditions thereof so that hologram output light 72 corresponding to one of the optical power distribution shown in Fig. 17A throughout 17D based on the signal levels of two output signals 75A and 75B from a photo-detector array 73.

From the above it follows that even when the optical signals 21A and 21B which have different wavelengths and have been modulated for their intensities with different signals are received in the input optical waveguide 20 shown in Fig. 14 in a wavelength multiplexed state, it is possible according to the embodiment shown in Fig. 11 to regenerate the original modulation signals also in output ports 74A and 74B of the photo-detector array 73.

In the foregoing, the case where intensity modulated optical signals have been exemplified as in the preceding embodiments in order to simplify the explanation. However, the present invention is applicable not only to the case where intensity modulation is used but also to the case where frequency modulation is adopted. Likewise, the same idea is no doubt applicable to the case where multivalent digital frequency modulation is performed although description has been made herein on the case of using binary digital frequency modulation.

Although explanation has been made on the fourth embodiment as described above, the present invention is not limited to the configuration shown in Fig. 14 or scope shown in various embodiments referred to hereinafter but various variations may be made which are similar to the variations (1) to (10) described above with respect to the first embodiment. In this case, care must be taken on various modifications in the configuration such as replacement of the neural network by the hologram element.

Though not described earlier, the hologram element 71 may be the one in which information is stored on a two-dimensional plate or the one in which information is stored three-dimensionally using three-dimensional optical crystals.

FIFTH EMBODIMENT

Fig. 18 illustrates the fifth embodiment of the present invention. The same reference numerals or symbols are used for the same parts or members as those used in the fourth embodiment shown in Fig. 14. Major difference between the fifth embodiment shown in Fig. 18 and the fourth embodiment shown in Fig. 14 is in that the optical multimode circuit 50 which has a new configuration is provided in the fifth embodiment in place of the optical multimode circuit 22 used in the fourth embodiment. The optical multimode circuit 22 is a single optical multimode waveguide while the optical multimode circuit 50 in the fifth embodiment is constructed by a plurality of optical waveguides (four optical waveguides in this embodiment). In other words, the optical multimode waveguide 51 and the four optical waveguides 53 connected to the terminal surfaces 52 of the optical multimode waveguide function together as the optical multimode circuit 50. This configuration is similar to that of the optical receiver according to the second embodiment shown in Fig. 12. The photo-detector array 73 is connected to the four optical waveguides 53 via the hologram element 71.

SIXTH EMBODIMENT

Fig. 19 illustrates the sixth embodiment of the present invention. The same reference numerals or symbols are used for the same parts or members as those used in the third and fourth embodiments shown in Figs. 13 and 14, respectively. Major difference between the sixth embodiment shown in Fig. 19 and the fourth embodiment shown in Fig. 14 is, like in the case of the fifth embodiment, in that the optical multimode circuit 60 which has a new configuration is provided in this embodiment in place of the optical multimode circuit 22 used in the fourth embodiment. The optical multimode circuit 22 is a single optical multimode waveguide while the optical multimode circuit 60 in the fifth embodiment is constructed by a plurality of optical waveguides. In other words, a combination of a plurality of the optical waveguides 54 and the optical branching circuit 55 and the directional coupler 56 connected to each other functions as the optical multimode circuit 60 in this embodiment. This configuration is similar to that of the optical receiver according to the third embodiment shown in Fig. 13. In this configuration, many types of optical circuits can be constructed by changing the combination and connection of the optical waveguides 54. Of course, the optical demultiplexer constructed by a single mode optical waveguide as illustrated in Fig. 2 as an example of conventional optical demultiplexer is also included in the optical receiver according to the present invention as a part thereof.

SEVENTH EMBODIMENT

Fig. 20 illustrates the seventh embodiment of the present invention. In this embodiment, a polarization separation element 80 is inserted between the optical multimode circuit 22 and the hologram elements 71A and 71B. After the output light 70 from the optical multimode circuit 22 is separated into polarized light rays 70A and 70B, the respective polarized light rays 70A and 70B are connected to the two hologram elements 71A and 71B. Output light rays 72A and 72B from the hologram elements 71A and 71B, respectively, are connected two photo-detector arrays 73A and 73B arranged downstream thereof, and output signals from the photo-detector arrays 73A and 73B are added and outputted by an addition circuit 81. Usually, the optical signal 21 launched into the optical waveguide 20 assumes various polarized states and for this reason an optical receiver having polarization independent optical demultiplexing characteristics can be realized by adopting the configuration as shown in Fig. 20.

EIGHTH EMBODIMENT

Fig. 21 shows the eighth embodiment of the present invention. In this embodiment, the neural network 27 described in the first embodiment above is connected at the downstream of the photo-detector array 73. Utilizing the pattern recognition function which the neural network 27 has, this embodiment enables further improvement in its signal regeneration characteristics.

NINTH EMBODIMENT

Fig. 22 shows the ninth embodiment of the present invention. In Fig. 22, reference numeral 90 indicates a diffraction grating, 91 a one-dimensional photodetector (PD) array arranged linearly, and 27 and 30 are a neural network and an output port thereof as in the preceding embodiments.

Major difference between this embodiment and other preceding embodiments is in the use of the optical conversion device 90.

As shown in Fig. 22, the wavelength multiplexed signal light 21 is scattered angularly or diffracted by the diffraction grating 90 to form an angularly scattered signal light 92 . Here, the wavelength multiplexed signal light 21 is a digital signal modified with respect to its intensity. On the photo-detector array the angularly scattered (diffracted) signal light 92 is converted into an optical power distribution having a single peak per wavelength as shown in Fig. 23. As will be apparent from Fig. 23, the optical power distribution varies continuously in the direction in which the array is arranged. However, since the photodetector has a limited size, the distribution of photoelectric current is represented by discontinuous or stepwise patterns as shown in Figs. 24 through 26. When the plural signal light rays are in a state of "ON" simultaneously, the distribution of photoelectric current is linear addition of the respective photoelectric currents thereof. Pattern recognition processing by the neural network 27 of such photoelectric current distribution outputted from the photo-detector array 91 results in the regeneration of signals corresponding to the respective wavelengths from the output ports 30 of the neural network 27.

As stated earlier, the internal conditions of the neural network 27 can be set up electrically so that it can generate specified output patterns in accordance with specified input patterns based on its function. For example, it can be set up such that a pattern [1, 0, ...., 0] is outputted form the output port 30 [$O_1$, $O_2$, ......, $O_n$] in response to an input of electric current distribution as shown in Fig. 24. The number of patterns to be preset is $2^n$ when the number of wavelength multiplexing is n assuming that binary signals are used. In this case, there occurs no deterioration of demultiplexing characteristics according accompanied by variation in wavelength since the neural network (NN) automatically alters the internal conditions thereof to adjust the demultiplexing wavelength even if variation in wavelength occurs in the light source.

In Figs. 24 through 26, the number of the photodetector (M) and that of multiplexed wavelengths (n) must satisfy the following relationship: $n \leqq M$.

As described above, in this embodiment, optical connection with high precision is unnecessary since the optical receiver is designed so that optical power distribution is received by the whole photo-detector array.

Although this embodiment uses a diffraction element as angular scattering element, the same operation can be performed when a prism is replaced therefor.

**Claims**

1. An optical wavelength demultiplexer comprising
an optical conversion device (22; 50; 60; 90) for converting a difference in wavelengths between a plurality of optical input signals (21A, 21B), which are input at one terminal surface (23) of said optical conversion device (22; 50; 60; 90) and propagate with respective propagation constants, into a difference in spatial power distribution on another terminal surface (24) of said optical conversion device (22; 50; 60; 90) in accordance with the difference between the propagation constants, and
a pattern recognition means for recognizing patterns of the spatial power distribution to output output signals (29A, 29B) indicating a result of recognizing the patterns, **said optical wavelength demultiplexer being characterized in that** said pattern recognition means comprises
a photo-detector array (25; 73; 91) which receives optical photo-detector input signals and converts said optical photo-detector input signals into electric photo-detector output signals (26; 75), and
a neural network (27) which, more particularly, comprises processing elements (40, 41) realized by an addition processor in which weighted addition of signals from a plurality of input ports are performed,
a non-linear processor in which signals are processed non-linearly, and
connection elements which combine the processing elements (40, 41) with each other, and which
processes said electric photo-detector output signals (26; 75) from said photo-detector array (25; 73; 91) and outputs said output signals (29A, 29B) corresponding to optical signals having respective wavelengths contained in said optical input signals (21A, 21B) having one or more wavelengths ($\lambda_1$ to $\lambda_4$) launched into said optical conversion device (22; 50; 60; 90).

2. An optical wavelength demultiplexer according to claim 1, **characterized in that** said optical photo-detector input signals received by said photo-detector array (25; 73; 91) are said spatial power distributions from said optical conversion device (22; 50; 60; 90).

3. An optical wavelength demultiplexer according to claim 1, **characterized in that** said pattern recognition means further comprises a hologram element (71) located between said optical conversion device (22; 50; 60; 90) and said photo-detector array (73), wherein
said optical photo-detector input signals received by said photo-detector array (25; 73; 91) are an output light (72) from said hologram element (71), and
said hologram element (71) receives said spatial power distributions output from said optical conversion device (22; 50; 60; 90) and processes said spatial power distributions according to wavefront conditions of said spatial power distributions and outputs said output light (72) corresponding to said optical signals with respective wavelengths contained in said optical input signals (21A, 21B) having one or more wavelengths ($\lambda_1$ to $\lambda_4$) launched into said optical conversion device (22; 50; 60; 90).

4. An optical wavelength demultiplexer according to any of the preceding claims 1 to 3, **characterized in that** said optical conversion device (22; 50; 60; 90) comprises an optical multimode circuit (22) which enables simultaneous propagation of a plurality of modes of said optical signals (21A, 21B), and
said optical conversion device (22; 50; 60; 90) is adapted to propagate optical input signals (21A, 21B) with one or more wavelengths launched into said one terminal surface (23) thereof and to output respective spatial power distributions of said optical input signals (21A, 21B) at said another terminal (24).

5. An optical wavelength demultiplexer according to any of the preceding claims 1 to 4, **characterized in that** said optical conversion device (22) is an optical multimode waveguide.

6. An optical wavelength demultiplexer according to any of the preceding claims 1 to 4, **characterized in that** said optical conversion device (50) comprises an optical multimode waveguide (51) and a plurality of optical waveguides (53) connected to an output side terminal surface (52) of said optical multimode waveguide (51).

7. An optical wavelength demultiplexer according to any of the preceding claims 1 to 4, **characterized in that** said optical conversion device (60) is an optical circuit comprising a combination of a plurality of optical waveguides (54), directional couplers (56), and Y-branch devices (55).

8. An optical wavelength demultiplexer according to any of the preceding claims 1 to 4, **characterized in that** said optical conversion device (90) is a diffraction grating.

**Patentansprüche**

1. Optische Wellenlängen-Demultiplexvorrichtung mit

einer optischen Wandlervorrichtung (22; 50; 60; 90) zum Umwandeln eines Wellenlängenunterschieds zwischen einer Vielzahl von optischen Eingangsignalen (21A, 21B), die an einer Anschlußoberfläche (23) der optischen Wandlervorrichtung (22; 50; 60; 90) eingegeben werden und sich mit entsprechenden Ausbreitungskonstanten ausbreiten, in einen Unterschied einer räumlichen Leistungsverteilung an einer anderen Anschlußoberfläche (24) der optischen Wandlervorrichtung (22; 50; 60; 90) entsprechend dem Unterschied zwischen den Ausbreitungskonstanten und

einer Muster-Erkennnungsvorrichtung zum Erkennen von Mustern der räumlichen Leistungsverteilung zum Ausgeben von Ausgangssignalen (29A, 29B), die ein Ergebnis der Erkennung des Musters angeben, **dadurch gekennzeichnet, daß**

die Muster-Erkennungsvorrichtung

eine Photodetektor-Anordnung (25; 73; 91), die optische Photodetektor-Eingangssignale aufnimmt und die optischen Photodetektor-Eingangssignale in elektrische Photodetektor-Ausgangssignale umwandelt, und

ein neuronales Netz (27) aufweist, das insbesondere

Verarbeitungselemente (40, 41), die durch eine Additions-Verarbeitungseinrichtung verwirklicht sind, bei denen eine gewichtete Addition von Signalen aus einer Vielzahl von Eingangsanschlüssen durchgeführt wird,

eine nichtlineare Verarbeitungseinrichtung, bei der Signale nichtlinear verarbeitet werden, und

Anschlußelemente aufweist, die die Verarbeitungselemente (40, 41) miteinander kombinieren,

und das die elektrischen Photodetektor-Ausgangssignale (26; 75) aus der Photodetektor-Anordnung (25; 73; 91) verarbeitet und die Ausgangssignale (29A, 29B) ausgibt, die optischen Signalen mit entsprechenden Wellenlängen entsprechen, die in den optischen Eingangssignalen (21A, 21B) mit einer oder mehreren Wellenlängen ($\lambda_1$ bis $\lambda_4$) enthalten sind, die in die optische Wandlervorrichtung (22; 50; 60; 90) eingegeben worden sind.

2. Optische Wellenlängen-Demultiplexvorrichtung nach Anspruch 1, **dadurch gekennzeichnet, daß** die durch die Photodetektor-Anordnung (25; 73; 91) aufgenommenen optischen Photodetektor-Eingangssignale die räumlichen Leistungsverteilungen aus der optischen Wandlervorrichtung (22; 50; 60; 90) sind.

3. Optische Wellenlängen-Demultiplexvorrichtung nach Anspruch 1, **dadurch gekennzeichnet, daß** die Muster-Erkennungsvorrichtung außerdem ein Hologramm-Element (71) aufweist, das sich zwischen der optischen Wandlervorrichtung (22; 50; 60; 90) und der photodetektor-Anordnung (73) befindet, wobei

die durch die photodetektor-Anordnung (25; 73; 91) aufgenommenen optischen photodetektor-Eingangssignale ein Ausgangslicht (72) aus dem Hologramm-Element (71) sind, und

das Hologramm-Element (1) die aus der optischen Wandlervorrichtung (22; 50; 60; 90) ausgegebenen räumlichen Leistungsverteilungen aufnimmt, die räumlichen Leistungsverteilungen entsprechend Wellenfront-Zuständen der räumlichen Leistungsverteilungen verarbeitet und das Ausgangslicht (72) entsprechend den optischen Signalen mit entsprechenden Wellenlängen ausgibt, die in den optischen Eingangssignalen (21A, 21B) mit einer oder mehreren Wellenlängen ($\lambda_1$ bis $\lambda_4$) enthalten sind, die in die optische Wandlervorrichtung (22; 50; 60; 90) eingegeben worden sind.

4. Optische Wellenlängen-Demultiplexvorrichtung nach einem der vorangehenden Ansprüche 1 bis 3, **dadurch gekennzeichnet, daß** die optische Wandlervorrichtung (22; 50; 60; 90) eine optische Mehrmoden-Schaltung (22) aufweist, die eine gleichzeitige Ausbreitung einer Vielzahl von Moden der optischen Signale (21A, 21B) ermöglicht, und

die optische Wandlervorrichtung (22; 50; 60; 90) die optischen Eingangssignale (21A, 21B) mit einer oder mehreren Wellenlängen sich ausbreiten läßt, die in deren Anschlußoberfläche (23) eingegeben worden sind, und entsprechende räumliche Leistungsverteilungen der optischen Eingangssignale (21A, 21B) an dem anderen Anschluß (24) ausgibt.

5. Optische Wellenlängen-Demultiplexvorrichtung nach einem der vorangehenden Ansprüche 1 bis 4, **dadurch gekennzeichnet, daß** die optische Wandlervorrichtung (22) ein optischer Multimoden-Wellenleiter ist.

6. Optische Wellenlängen-Demultiplexvorrichtung nach einem der vorangehenden Ansprüche 1 bis 4, **dadurch gekennzeichnet, daß** die optische Wandlervorrichtung (50) einen optischen Multimoden-Wellenleiter (51) und eine Vielzahl von optischen Wellenleitern (53) aufweist, die an eine Anschlußoberfläche (52) der Ausgangsseite des optischen Multimoden-Wellenleiters (51) angeschlossen ist.

7. Optische Wellenlängen-Demultiplexvorrichtung nach einem der vorangehenden Ansprüche 1 bis 4, **dadurch gekennzeichnet, daß** die optische Wandlervorrichtung (60) eine optische Schaltung ist, die eine Kombination aus einer Vielzahl von optischen Wellenleitern (54), Richtungskopplern (56) und Y-Verzweigungsvorrichtungen (55) aufweist.

8. Optische Wellenlängen-Demultiplexvorrichtung nach einem der vorangehenden Ansprüche 1 bis 4, **dadurch gekennzeichnet, daß** die optische Wandlervorrichtung (90) ein Beugungsgitter ist.

**Revendications**

1. Un démultiplexeur de longueur d'onde optique comprenant

un dispositif de conversion optique (22 ; 50 ; 60 ; 90) pour convertir une différence de longueurs d'onde entre un ensemble de signaux d'entrée optiques (21A, 21B), qui sont appliqués sur une surface terminale (23) du dispositif de conversion optique (22 ; 50 ; 60 ; 90) et qui se propagent avec des constantes de propagation respectives, en une différence de distribution de puissance spatiale sur une autre surface terminale (24) du dispositif de conversion optique (22 ; 50 ; 60 ; 90), conformément à la différence entre les constantes de propagation, et

des moyens de reconnaissance de formes destinés à reconnaître des formes de la distribution de puissance spatiale pour émettre des signaux de sortie (29A, 29B), indiquant un résultat de reconnaissance des formes, ce démultiplexeur de longueur d'onde optique étant caractérisé en ce que les moyens de reconnaissance de formes comprennent

un réseau de photodétecteurs (25 ; 73 ; 91) qui reçoit des signaux d'entrée optiques de photodétecteurs et qui convertit ces signaux d'entrée optiques de photodétecteurs en signaux de sortie électriques de photodétecteurs (26 ; 75), et

un réseau neuronal (27) qui comprend plus particulièrement des éléments de traitement (40, 41) réalisés par un processeur d'addition dans lequel sont effectuées des additions pondérées de signaux provenant d'un ensemble d'accès d'entrée,

un processeur non linéaire dans lequel des signaux sont traités de façon non linéaire, et des éléments de connexion qui combinent mutuellement les éléments de traitement (40, 41), et qui

traite les signaux de sortie électriques de photodétecteurs (26 ; 75) provenant du réseau de photodétecteurs (25 ; 73 ; 91) et émet les signaux de sortie (29A, 29B) correspondant à des signaux optiques ayant des longueurs d'onde respectives contenus dans les signaux d'entrée optiques (21A, 21B) ayant une ou plusieurs longueurs d'onde ($\lambda_1$ à $\lambda_4$) qui sont lancés dans le dispositif de conversion optique (22 ; 50 ; 60 ; 90).

2. Un démultiplexeur de longueur d'onde optique selon la revendication 1, caractérisé en ce que les signaux d'entrée optiques de photodétecteurs qui sont reçus par le réseau de photodétecteurs (25 ; 73 ; 91) sont les distributions de puissance spatiales qui proviennent du dispositif de conversion optique (22 ; 50 ; 60 ; 90).

3. Un démultiplexeur de longueur d'onde optique selon la revendication 1, caractérisé en ce que les moyens de reconnaissance de formes comprennent en outre un élément à hologramme (71) placé entre le dispositif de conversion optique (22 ; 50 ; 60 ; 90) et le réseau de photodétecteurs (73), dans lequel

les signaux d'entrée optiques de photodétecteurs qui sont reçus par le réseau de photodétecteurs (25 ; 73 ; 91) consistent en une lumière de sortie (72) de l'élément à hologramme (71), et

cet élément à hologramme (71) reçoit les distributions de puissance spatiales qui sont émises par le dispositif de conversion optique (22 ; 50 ; 60 ; 90) et il traite ces distributions de puissance spatiales conformément à des conditions de front d'onde des distributions de puissance spatiales, et il émet la lumière de sortie (72) correspondant aux signaux optiques avec des longueurs d'onde respectives contenus dans les signaux d'entrée optiques (21A, 21B) ayant une ou plusieurs longueurs d'onde ($\lambda_1$ à $\lambda_4$) qui sont lancés dans le dispositif de conversion optique (22 ; 50 ; 60 ; 90).

4. Un démultiplexeur de longueur d'onde optique selon l'une quelconque des revendications 1 à 3 précédentes, caractérisé en ce que le dispositif de conversion optique (22 ; 50 ; 60 ; 90) comprend un circuit multimode optique (22) qui permet la propagation simultanée d'un ensemble de modes des signaux optiques (21A, 21B), et le dispositif de conversion optique (22 ; 50 ; 60 ; 90) est adapté pour permettre la propagation de signaux d'entrée optiques (21A, 21B) avec une ou plusieurs longueurs d'onde qui sont lancés dans sa surface terminale (23) mentionnée en premier, et pour émettre par l'autre surface terminale (24) des distributions de puissance spatiales respectives des signaux d'entrée optiques (21A, 21B).

5. Un démultiplexeur de longueur d'onde optique selon l'une quelconque des revendications 1 à 4 précédentes, caractérisé en ce que le dispositif de conversion optique (22) est un guide d'ondes multimode optique.

6. Un démultiplexeur de longueur d'onde optique selon l'une quelconque des revendications 1 à 4 précédentes, caractérisé en ce que le dispositif de conversion optique (50) comprend un guide d'ondes multimode optique (51) et un ensemble de guides d'ondes optiques (53) connectés à une surface terminale du côté de sortie (52) du guide d'ondes multimode optique (51).

7. Un démultiplexeur de longueur d'onde optique selon l'une quelconque des revendications 1 à 4 précédentes, caractérisé en ce que le dispositif de conversion optique (60) est un circuit optique qui comprend une combinaison d'un ensemble de guides d'ondes optiques (54), de coupleurs directionnels (56) et de dispositifs de bifurcation en Y (55).

8. Un démultiplexeur de longueur d'onde optique selon l'une quelconque des revendications 1 à 4 précédentes, caractérisé en ce que le dispositif de conversion optique (90) est un réseau de diffraction.

# FIG. I
## PRIOR ART

EP 0 395 060 B1

FIG.2
PRIOR ART

EP 0 395 060 B1

# FIG. 3
# PRIOR ART

FIG. 4

## FIG. 5A

A-1

## FIG. 5B

A-2

## FIG. 6A

(1, 0)

## FIG. 6B

(0, 1)

## FIG. 6C

(1, 1)

## FIG. 6D

(0, 0)

## FIG. 7A

OPTICAL POWER
INTENSITY (ARB.)

0.5

0          0.5          1

Δλ = 0nm          x/a

## FIG. 7B

OPTICAL POWER
INTENSITY (ARB.)

0.5

0          0.5          1

Δλ = 1nm          x/a

## FIG. 7C

OPTICAL POWER
INTENSITY (ARB.)

0.5

0          0.5          1

Δλ = 2nm          x/a

## FIG. 7D

OPTICAL POWER
INTENSITY (ARB.)

0.5

0          0.5          1

Δλ = 3nm          x/a

FIG.8A

FIG.8B

FIG.8C

λ1

λ2

( 0. 0 ) ( 0. 1 ) ( 1. 0 ) ( 1. 1 )    ( 0. 0 ) ( 0. 1 ) ( 1. 0 ) ( 1. 1 )    ( 0. 0 ) ( 0. 1 ) ( 1. 0 ) ( 1. 1 )

EP 0 395 060 B1

FIG. 9

## FIG. 10

EP 0 395 060 B1

FIG. 11

## FIG. 12

EP 0 395 060 B1

FIG. 13

EP 0 395 060 B1

# FIG. 14

# FIG. 15

FIG.16A

FIG.16B

FIG.17A

(1,0)

FIG.17B

(0,1)

FIG.17C

(1,1)

FIG.17D

(0,0)

FIG. 18

EP 0 395 060 B1

FIG. 19

# FIG. 20

EP 0 395 060 B1

FIG. 21

# FIG. 22

$\lambda_1, \lambda_2, \lambda_n$

# FIG. 23

OPTICAL POWER

$\lambda_1$   $\lambda_2$   $\lambda_n$

$(\frac{\sin X}{X})^2 \cdot (\frac{\sin K^X}{X})^2$

$K = 500 \sim 1000$

POSITION OF PHOTODETECTOR ARRAY NEAR
CENTER OF OPTICAL POWER DISTRIBUTION

## FIG. 24

for $\lambda_1$

NUMBER OF PD ARRAY

## FIG. 25

for $\lambda_2$

NUMBER OF PD ARRAY

# FIG. 26